# EUROPEAN PATENT SPECIFICATION

(11) **EP 3 981 528 B1**
(45) Date of publication and mention of the grant of the patent: **26.11.2025**
(21) Application number: 20306173.4
(22) Date of filing: 08.10.2020
(51) Int. Cl.: B22F 10/10, B22F 10/14, B22F 10/37, B22F 10/50, B22F 12/17, B22F 12/30, B28B 1/00, B28B 7/44, B29C 64/165, B29C 64/245, B33Y 10/00, B33Y 30/00, B33Y 40/00, B22F 1/00, B22F 1/107, B22F 3/10

(54) **AIR-PERMEABLE PLATFORMS FOR ADDITIVE MANUFACTURING**
LUFTDURCHLÄSSIGE PLATTFORMEN ZUR GENERATIVEN FERTIGUNG
PLATEFORMES PERMÉABLES À L'AIR POUR FABRICATION ADDITIVE

(43) Date of publication of application: 13.04.2022
(73) Proprietor: Peridot Print LLC, Palo Alto, CA 94304 (US)
(72) Inventor: ANTHONY, Tom, Palo Alto, CA 94304 (US); LAUCOURNET, Richard, 75015 Paris Cedex (FR); CASTAY, Blandine, 75015 Paris Cedex (FR)
(74) Representative: Haseltine Lake Kempner LLP

(56) References cited:
- WO-A1-2019/236074
- WO-A1-2020/185553
- WO-A1-98/56566

## Description

### BACKGROUND

Additive manufacturing systems produce three-dimensional (3D) objects by building up layers of material. 3D printing devices and other additive manufacturing devices make it possible to convert a computer-aided design (CAD) model or other digital representation of an object directly into the physical object. WO2019236074A1 discloses removing components of liquid agents in 3d printing. WO2020185553A1 discloses a method and an apparatus for digital fabrication of objects using actuated micropixelation and dynamic density control.

### BRIEF DESCRIPTION OF THE DRAWINGS

The accompanying drawings illustrate various examples of the principles described herein and are part of the specification. The illustrated examples are given merely for illustration, and do not limit the scope of the claims.
Fig. 1 is a block diagram of an air-permeable platform for additive manufacturing, according to an example of the principles described herein.
Fig. 2 is a block diagram of an additive manufacturing device with an air-permeable platform for additive manufacturing, according to an example of the principles described herein.
Fig. 3 is a side view of an additive manufacturing device with an air-permeable platform for additive manufacturing, according to an example of the principles described herein.
Fig. 4 is a flow chart of a method for removing air resident in an additive manufacturing device via an air-permeable platform, according to an example of the principles described herein.
Fig. 5 is a side view of an additive manufacturing device with an air-permeable platform for additive manufacturing, according to an example of the principles described herein.
Fig. 6 is a side view of an additive manufacturing device with an air-permeable platform for additive manufacturing, according to an example of the principles described herein.
Fig. 7 is a flow chart of a method for removing air resident in an additive manufacturing device via an air-permeable platform, according to an example of the principles described herein.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### DETAILED DESCRIPTION

Additive manufacturing systems form a three-dimensional (3D) object through the solidification of layers of build material. Additive manufacturing systems make objects based on data in a 3D model of the object generated, for example, with a computer-aided drafting (CAD) computer program product. The model data is processed into slices, each slice defining portions of a layer of build material that are to be solidified.

In one particular example, not covered by the claims a build material is deposited as dry powder and a binding agent is selectively applied to the layer of build material. The binding agent is deposited in a pattern of a slice of a 3D object to be printed. This process is repeated per layer until the 3D object is formed.

As set out in the claims, the build material is deposited as part of a slurry. That is, the slurry may include build material particles, which build material particles may be metallic, ceramic, or polymer. In this example, the slurry is deposited, spread and allowed to dry. A binding agent may be selectively applied to the slurry material in a pattern of a slice of a 3D object to be printed.

The binding agent may be cured to form a "green" 3D object. Cured binding agent holds the build material of the green 3D object together. The binding agent may include binding component particles which are dispersed throughout a liquid carrier. The binding component particles of the binding agent move into the vacant spaces between the build material particles. The binding component particles are activated or cured by heating the binding agent to the melting point of the binding component particles. The binding component particles then flow to form adhesive bridges between build material particles. This process is repeated in a layer-wise fashion to generate a green 3D object. When activated or cured, the binding component particles glue the build material particles into the cured green object shape. The cured green object has enough mechanical strength such that it is able to withstand extraction from the build area without being deleteriously affected (e.g., the shape is not lost).

In another example, the binding agent may include a binding component that is soluble in a liquid carrier. In this example, adhesive connections between build material particles are created upon evaporation of the liquid carrier of the binding agent. Additional heating beyond evaporation of the liquid carrier may be used to cure the binding component. Soluble binding components may include polymers or inorganic materials, such as metal salts. Thermal curing of the binding agent may be done in a layer-wise manner during printing or by a post-print treatment in an oven.

In another example, the binding agent may include an ultraviolet (UV) curable component that is activated or cured by exposure to UV radiation in a layer-wise manner. The radiation cross-links the binding molecules to form a rigid polymer that links together build material particles to form a green body. The green 3D object may then be placed in a furnace to expose the green 3D object to electromagnetic radiation and/or heat to sinter the build material in the green 3D object to form the finished 3D object. Specifically, the binding agent is removed and the temperature is further raised such that sintering of the powder particles occurs to form a 3D object. It is to be understood that the term "green" does not connote color, but rather indicates that the part is not yet fully processed.

In another example, referred to as selective laser melting (SLM), portions of the build material are selectively melted to form a slice of a 3D printed object. In SLM, no binding agent is used and no subsequent oven-sintering process is performed. That is, in this case, the metal 3D object is formed as a high power-density laser melts and fuses metallic powder particles together. Similar to binding agent-based systems, the SLM additive operation may be performed in a layer-wise fashion where a layer of powder build material is laid down as part of a slurry and select portions are fused. The process is repeated until a complete metal 3D object is formed.

While such additive manufacturing operations have greatly expanded manufacturing and development possibilities, further development may make 3D printing a part of even more industries. For example, in systems where a liquid is used, either in the form of a binding agent or a slurry in which the build material is dispersed, the liquid may indirectly affect the mechanical, thermal, and/or electrical properties of the finished 3D object.

That is, liquid introduced onto the surface of a layer of build material is drawn into underlying layers via capillary forces. Air displaced by the encroaching liquid may become trapped before it escapes to the surface, creating voids or porosity in the layer. Slurry coating and agent-based printing operations both apply liquid to the surface of the build material and may give rise to air entrapment. That is, voids are formed as displaced air is trapped as a liquid agent percolates into the build material.

Air entrapment arises in slurry coating processes, where particles suspended in a carrier fluid are applied as a coating onto a bed. In a slurry-based process, volume between powder particles initially is filled with slurry vehicle, which is evaporated prior to patterning and coating the subsequent layer. Consequently, in a slurry-based binder jet process, liquid penetrates into underlying dry powder twice each print cycle: 1) when jetting the pattern, and 2) when slurry coating.

Porosity in 3D printed objects degrades mechanical performance by providing nucleation sites for crack propagation. Reduced tensile strength and premature fatigue failure may result. In the case of metal build material, electrical and thermal conductivities may also be degraded due to electron scattering at pore boundaries.

Accordingly, the methods set out herein reduce the presence of trapped air in the body of the 3D printed object. Specifically, a system as claimed herein includes a source that applies a vacuum to the underside of a porous substrate platen. The vacuum permeates through the pores of the platen. A pressure gradient across the build material drives displaced air downward where it is exhausted through the porous platen into a vacuum pump. Applying a vacuum to the bottom side of the build area through a porous substrate platen gives air displaced by wicked liquid an escape route. Removal of displaced air prevents voids from forming in green parts leading to higher density parts that have better mechanical and electrical performance.

Applying vacuum to the build bed may also provide a path for removal of vapor phase components of the binding agent and/or slurry liquid carriers as they evaporate from the build layer. An increased evaporation rate may reduce layer cycle time, thereby increasing throughput of the additive manufacturing system.

Specifically, the present invention describes an additive manufacturing system as defined in claim 1.

The present invention also describes a method as defined in claim 11.

The present specification also describes an additive manufacturing device as defined in claim 8.

Such systems and methods 1) reduce the presence of voids caused by trapped air in slurry coatings and/or agent-based additive manufacturing operations; 2) is a low-cost solution; 3) broaden the range of slurry chemistries that may be used; 4) increases throughput by increasing carrier evaporation rates; and 5) allow for higher coverage of a binding agent.

As used in the present invention and in the appended claims, the term "binding agent" may refer to any agent that includes a binding compound to join build material particles together. In some examples, the binding agent may include a latex binder. In other examples, the binding agent may include metal salts or metal nanoparticles that sinter the build material particles together when energy is applied to the build bed. In yet another example, the binding agent may be a UV-curable material.

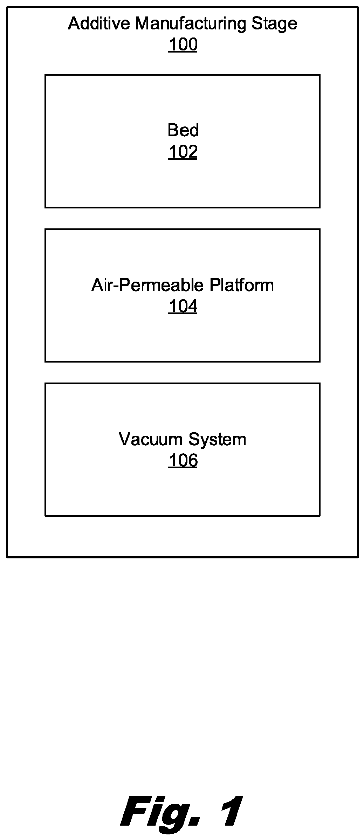

Fig. 1 is a block diagram of an air-permeable platform (104) for additive manufacturing, according to an example of the principles described herein. As described above, additive manufacturing refers to a process where a raw material in form of powder build material dispersed throughout a slurry is deposited as a layer. A binding system, such as an agent-based system, operates to form a slice of a 3D object to be printed. These processes are repeated per layer until a 3D printed object is formed. These operations occur in a bed (102) of an additive manufacturing stage (100). That is, the bed (102) defines the volume where the three-dimensional (3D) object is to be formed.

The additive manufacturing stage (100) also includes an air-permeable platform (104) on which build material is deposited. That is, the air-permeable platform (104) provides a rigid base on which the build material is deposited and where the build material is hardened.

The build material is a slurry that includes build material particles, a liquid carrier, and a viscosity increasing agent. The viscosity increasing agent may be a hydrocolloid. In an example, the build material particles may be metallic, ceramic, or polymeric. The hydrocolloid may be present in an amount ranging from 0.05 percent by volume to less than 2 percent by volume of the slurry. The liquid carrier may be any variety of liquids including water.

In the case of a metallic build material, the slurry may include metallic particles that may be any particulate metallic material. The particulate metallic material may be in powder form prior to being incorporated into the slurry. As an example, metal injection molding (MIM) powders may be used as the metallic particles. In an example, the metallic particles may be a single-phase metallic material composed of one element. In another example, the metallic particles are composed of two or more elements, which may be in the form of a single-phase metallic alloy or a multiple-phase metallic alloy. Some examples of the metallic particles include steels, stainless steel, bronzes, titanium (Ti) and alloys thereof, aluminum (AI) and alloys thereof, nickel (Ni) and alloys thereof, cobalt (Co) and alloys thereof, iron (Fe) and alloys thereof, nickel cobalt (NiCo) alloys, gold (Au) and alloys thereof, silver (Ag) and alloys thereof, platinum (Pt) and alloys thereof, and copper (Cu) and alloys thereof.

In another example, the build material particles may be ceramic. The ceramic particles may be any particulate ceramic material. Examples of suitable ceramic materials include metal oxides, inorganic glasses, carbides, nitrides, and borides. Some specific examples include alumina (Al2O3), Na2O/CaO/SiO2 glass (soda-lime glass), silicon nitride (Si3N4), silicon dioxide (SiO2), zirconia (ZrO2), titanium dioxide (TiO2), or combinations thereof. As an example of one suitable combination, 30 wt% glass may be mixed with 70 wt% alumina. In yet another example, the build material particles may be polymer particles, such as PA-12.

As described above, the slurry includes a viscosity increasing agent such as a hydrocolloid. In some examples, the hydrocolloid is a high molecular weight polymer (e.g., ranging from about 0.5x10⁶ g/mol to about 50x10⁶ g/mol) that can undergo physical crosslinking when little or no shear is applied (e.g., a shear rate of 0.1 s-1 or less). The physical crosslinks create an entangled polymer network, e.g., through Van der Waals forces, hydrogen bonding, etc. The metallic or ceramic particles of the build material slurry may be held within this entangled polymer network, which helps decrease particle settling. In an example, the hydrocolloid is selected from the group consisting of xanthan gum, scleroglucan, carboxymethyl cellulose, guar gum, locust bean gum, tara gum, cassia gum, gum tragacanth, agar, welan gum, diutan gum, rhamsan gum, carrageenan, flaxseed gum, tamarind gum, konjac maanan, agarose, gellan gum, and combinations thereof.

The platform (104) is air-permeable such that air resident in the build material is drawn down when a vacuum is applied. That is, as additional layers of slurry or binding agent are applied, the liquid therein seeps into underlying layers and in so doing displaces air between particles of these underlying layers. This displaced air may not be able to escape and if entrapped in the layer, may form performance-impacting voids in the 3D object. Accordingly, an air-permeable platform (104) provides a path through which the air is drawn. In some examples, the air-permeable platform (104) may be a porous metal or ceramic that has pores ranging from 5 to 150 microns. The pores may allow passage of air, but may be small enough that build material particles may not pass through. As used in the present specification the pore size may refer to an average of a distribution of pore sizes.

In another example, the air-permeable platform (104) is a perforated plate with holes dispersed throughout. Similar to the porous plate, the perforated plate also allows air to pass through. That is, as a layer of build material is deposited, the liquid, whether as a subsequent layer of slurry or as the binding agent which may be deposited on the build material, wicks into underlying layers. The liquid causes air in those underlying layers to aggregate in pockets. While some air may escape, other air may remain in the layer throughout the additive manufacturing operation up to, and including sintering. These air pockets may result in voids that adversely impact the mechanical, electrical, and thermal properties of the formed part. In yet a further example, the air-permeable platform (104) includes both a porous material and a perforated plate. For example, a porous material plate may be placed on top of the perforated plate.

Accordingly, the additive manufacturing stage (100) includes a vacuum system (106) to draw the air pockets resident in the build material out of the build material. Specifically, the vacuum system (106) may be disposed under the air-permeable platform (104). As the platform (104) is air-permeable, the vacuum system (106) draws air pockets down out of the layer, and through the air-permeable platform (104).

In some examples, one or multiple layers of build material may be deposited before the vacuum system (106) is engaged to draw down resident air. Doing so may prevent the transport of metal particles through the porous material. In the case of just a perforated plate and no porous material, the delay in application of the vacuum may prevent the metal particles from clogging the perforations.

Accordingly, the additive manufacturing stage (100) of the present invention reduces the presence of air pockets in layers of build material, which air pockets may result in performance-reducing voids in the finished 3D printed object. That is, the vacuum system (106) provides a route by which entrapped air may escape so that it does not remain in the 3D object as a void. Moreover, as described above, application of vacuum may assist in the evaporation of liquid carrier in both the slurry and any binding agent.

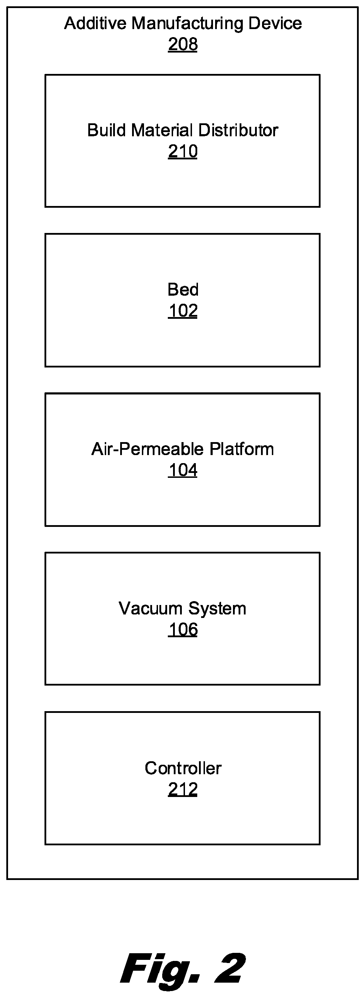

Fig. 2 is a block diagram of an additive manufacturing device (208) with an air-permeable platform (104) for additive manufacturing, according to an example of the principles described herein. As described above, the additive manufacturing device (208) includes a bed (102), air-permeable platform (104), and vacuum system (106) to draw out the air that may be present in a layer of build material so as to reduce void formation in the final 3D printed object.

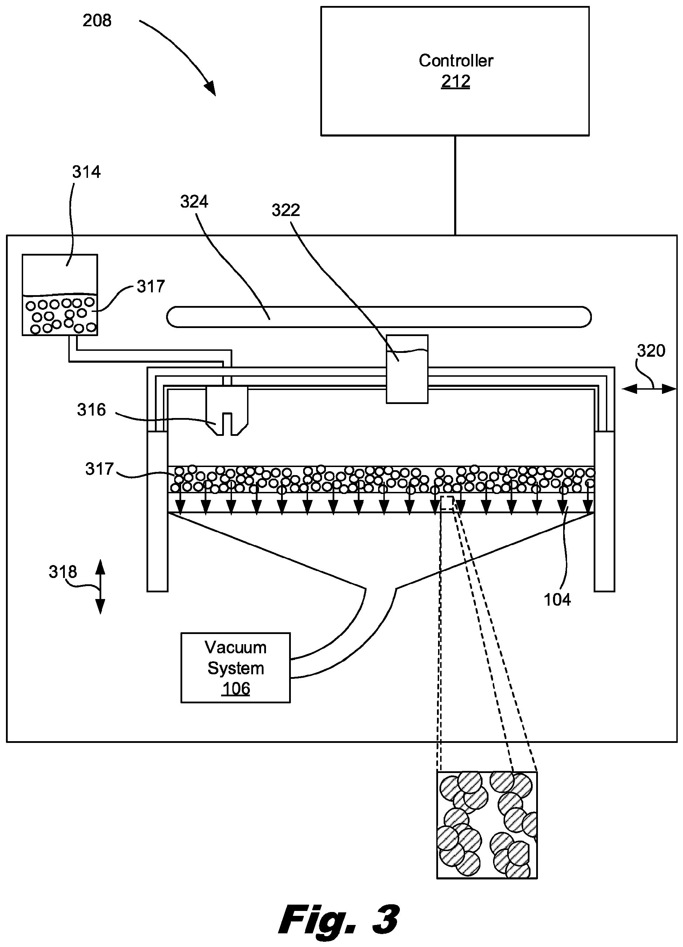

The additive manufacturing device (208) also includes build material distributor (210) to successively deposit layers of a slurry build material into a build area. The build material distributor (210) may acquire the build material from a hopper or other receptacle. In some examples, such as that depicted in Fig. 3, the build material distributor (210) may be coupled to a carriage that traverses across the bed (102) to distribute the build material. The build material is a powder build material dispersed throughout a slurry.

The additive manufacturing device also includes a controller (212) to control the vacuum pressure in the vacuum system (106) as well as other aspects of the additive manufacturing process. For example, as layers are added, the thickness of the build material in the bed (102) increases. With each successive layer that is deposited, the vacuum force at the top may reduce due to the increased distance between the vacuum source and the top layer. Accordingly, the controller (212) may increase the vacuum force as more layers of build material are deposited to ensure that air is adequately drawn from the top layer of build material. That is, to reduce a pressure differential, pressure on the vacuum side of the system is increased either by throttling the pump or bleeding gas into the vacuum side or both.

Other of the previously described physical elements may also be operatively connected to the controller (212). Specifically, the controller (212) may direct a build material distributor (210) and any associated scanning carriages to move to add a layer of build material. Further, the controller (212) may send instructions to direct a printhead of an agent distributor to selectively deposit the agent(s) onto the surface of a layer of the build material. The controller (212) may also direct the printhead to eject the agent(s) at specific locations to form a 3D printed object slice.

In the example, where the additive manufacturing device (208) is agent-less, such as with an SLM additive manufacturing system, the controller (212) may direct operation of those components. The controller (212) may further raise and lower the air-permeable platform (104). That is, as described below in connection with Fig. 3, the air-permeable platform (104) may rise and lower to accommodate the formation of subsequent layers of the 3D object to be printed.

The controller (212) may include various hardware components, which may include a processor and memory. The processor may include the hardware architecture to retrieve executable code from the memory and execute the executable code. As specific examples, the controller as described herein may include computer readable storage medium, computer readable storage medium and a processor, an application specific integrated circuit (ASIC), a semiconductor-based microprocessor, a central processing unit (CPU), and a field-programmable gate array (FPGA), and/or other hardware device.

The memory may include a computer-readable storage medium, which computer-readable storage medium may contain, or store computer usable program code for use by or in connection with an instruction execution system, apparatus, or device. The memory may take many types of memory including volatile and non-volatile memory. For example, the memory may include Random Access Memory (RAM), Read Only Memory (ROM), optical memory disks, and magnetic disks, among others. The executable code may, when executed by the controller (212) cause the controller (212) to implement at least the functionality of building a 3D printed object.

Fig. 3 is a side view of an additive manufacturing device (208) with an air-permeable platform (104) for additive manufacturing, according to an example of the principles described herein. In an example, the additive manufacturing device (208) includes a receptacle (314) to hold the build material. The build material is a slurry of build
material particles, a liquid carrier, and a viscosity increasing agent. The additive manufacturing device (208) also includes a build material distributor (316) to deposit the build material across the bed (Fig. 1, 102).

As depicted in Fig. 3, the receptacle (314) may be a container, bed, or other vessel or surface that is to deliver the build material to the build material dispenser (316). In the example shown, the receptacle (314) is a remote vessel that feeds the build material into the build material dispenser (316) through a tube or other fluid conduit. However, in other examples, the receptacle (314) may take other forms. For example, the receptacle (314) may include a mechanism (e.g., a delivery piston or pump) to provide, e.g., move, the build material from a storage location to a position to be spread onto the air-permeable platform (104). For example, the receptacle (314) may be a stationary container located at the side of the additive manufacturing device (208) and may include a piston or pump to push the build material into a position where it can be spread across the air-permeable platform (104) by the build material distributor (316). In some examples, the receptacle (314) may include a mixing device to ensure uniform distribution of slurry components throughout the slurry volume.

Fig. 3 clearly depicts the air-permeable platform (104). The air-permeable platform (104) may be a horizontal surface upon which the build material (317) is applied and patterned to define any desirable shape. The air-permeable platform (104) receives the build material (317) from the receptacle (314). The air-permeable platform (104) may be integrated with the additive manufacturing device (208) or may be a component that is separately insertable into the additive manufacturing device.

In the example depicted in Fig. 3, the air-permeable platform (104) is a porous material that includes pores through which air may travel. The porous material may have an open pore structure meaning that there is a continuous porosity path throughout the thickness of the platform as depicted in Fig. 3. By comparison, a closed pore structure would not allow air to travel through the porous material plate. As depicted in Fig. 3, the pore size and porosity path of the porous material is not necessarily drawn to scale and has been enlarged to show detail.

As described above, the porous material may have pores ranging from 5 microns to 150 microns in diameter such that air may pass through. Pores of this size ensure that build material (317) particles do not draw through the pores. Were metal particles from the slurry or from dry powder to pass through the pores of the porous air-permeable platform (104), these build material (317) particles may clog the pores thus reducing the effect of the vacuum system (106) to draw air out of a layer of build material. In some examples, the porous material may be a porous metal material such as a loosely-sintered steel or aluminum. In other examples, the porous material may be a porous ceramic material.

As described above, the air-permeable platform (104) allows air to pass through. That is, the vacuum system (106) draws a vacuum. Due to the air-permeability of the platform (104), air that may reside in a deposited layer of build material (317) draws down through the air-permeable platform (104) as indicated by the arrows. In this example, the air is removed from the build material (317) and therefore does not result in voids in the final 3D printed object.

In some examples, the air-permeable platform (104), and in some cases other surfaces of the bed (Fig. 1, 102) may be heated. A heated platform (104) and sidewalls increases the evaporation rate of carrier fluid from both the slurry and the binding agent. In some examples, the air-permeable platform (104) itself may be heated. In another example, the air-permeable platform (104) may be adhered to a resistive heater located just below the air-permeable platform (104).

In some examples, the air-permeable platform (104) may be moved in a direction as denoted by the arrow (318), e.g., along the Z-axis, so that the build material (317) may be delivered to air-permeable platform (104) or to a previously deposited layer of build material (317). That is, when a layer of build material (317) is to be delivered, the air-permeable platform (104) may be programmed to advance (e.g., downward) enough so that the build material dispenser (316) may deposit the build material (317) onto the air-permeable platform (104) to form a slurry layer of the build material thereon.

During operation, the build material dispenser (316), which may span a length of the build area receives the build material (317) from the receptacle (314) and delivers the build material (317) locally to the air-permeable platform (104). The build material dispenser (316) may be moved in a direction as denoted by the arrow (320) e.g., along the Y-axis, cross the air-permeable platform (104) to deliver the build material (317) to the air-permeable platform (104). In one example, the build material dispenser (316) is a slot die coater.

In some examples, the build material dispenser (316) may include an additional component to spread the build material (317). For example, the build material dispenser (316) may include a blade (e.g., a doctor blade), a roller, a combination of a roller and a blade, and/or any other device capable of spreading the build material (317) over the air-permeable platform (104). For instance, the build material dispenser (316) may include a counter-rotating roller.

In some examples, the additive manufacturing device (208) includes an agent distributor (322) to selectively distribute a binding agent onto layers of the build material (317) in a pattern of a slice of the 3D object. The binding agent, when exposed to heat, may activate and selectively harden the underlying build material (317). The binding agent may take many forms. In one example, the binding agent includes metal salts or metal nanoparticles that bind the build material (317) particles together when energy is applied to the build bed.

In another example, the binding agent is a latex binder that temporarily adheres build material (317) particles together until they can be sintered together in a sintering operation. In this example, the latex binder may be a binding material that is inactive (non-binding) in a liquid vehicle, but becomes active (binding) upon exposure to heat or electromagnetic radiation. In some examples, the latex binder is a polymer.

A 3D object that has the latex binder dispensed thereon may be referred to as a patterned intermediate part which has a shape representative of the final 3D printed object and that includes metallic or ceramic particles patterned with a latex binder. In the patterned intermediate part, the metallic or ceramic particles may be weakly bound together by the hydrocolloid of the slurry, by components of the latex binder, and/or by attractive force(s) between the metallic or ceramic particles and the latex binder. In some instances, the mechanical strength of the patterned intermediate part is such that it cannot be handled or extracted from a bed (Fig. 1, 102).

Binding agent activation may include heating the binding agent to reach the minimum film formation temperature (MFFT) of the binding agent or to reach a reaction temperature that leads to a chemical change in the binding agent. In some examples, the binding agent may be exposed to ultraviolet (UV) radiation (e.g., wavelengths ranging from about 100 nm to about 400 nm) to initiate a chemical reaction in the binding agent.

In some examples, the binding agent may be a sacrificial intermediate agent in that it is present in various stages of the intermediate part that is formed, and then is ultimately removed (through thermal decomposition) in a de-binding operation and thus is not present in the final sintered 3D object. Examples of sacrificial intermediate agents that are activated by exposure to electromagnetic radiation in the UV range include epoxy acrylates, aliphatic urethane acrylates, aromatic urethane acrylates, polyester acrylates, and acrylic acrylates.

In another example, the binding agent is not sacrificial, but rather is a material that is not removed by thermal decomposition and is retained in the final, sintered 3D printed object. Metal nanoparticles and activated metal salts (e.g., metal salt decomposition products) are examples of agent materials that are not removed from the part by thermal decomposition. Examples of metal nanoparticle binders include silver (Ag), copper (Cu), gold (Au), nickel (Ni) and cobalt (Co) nanoparticles. Examples of metal salt binders include copper nitrate (Cu(NO3)2), iron nitrate (Fe(NO3)3), cobalt nitrate (Co(NO3)2), nickel nitrate (Ni(NO3)2), iron acetate (Fe(CH3COO)2,) magnesium acetate (Mg(CH3COO)2), copper sulfate (CuSO4), and manganese sulfate (MgSO4).

After exposure to elevated temperature, these metal salts can be activated (decomposed) to become water-insoluble decomposition products, such as metal oxides. While several example agents have been described, in an example of the binding agent, the binding component may be of a variety of types, such as acrylic latex, polyurethane, polyethylene, polypropylene, polyamide, UV curable monomers and oligomers, metal nanoparticles, metal salts and combinations thereof.

Note that in some examples, the additive manufacturing device (208) does not include an agent distributor (322). That is, the additive manufacturing device (208) may selectively harden portions of the build material (317) in other ways. For example, with selective laser melting (SLM), no binding agent is used and no subsequent oven-sintering process is performed. In these examples, the vacuum system (106) draws out the air from one layer of slurry build material (317) that is displaced as liquid from a second layer of slurry build material (317) seeps down.

In some examples, the agent distributor (322) is an inkjet agent distributor (322). The agent distributor (322) may include a reservoir containing the binding agent. The agent distributor (322) may also include nozzles, fluid slots, and/or fluidics for dispensing the binding agent. In some examples, the agent distributor (322) may be a thermal inkjet printhead or print bar, a piezoelectric printhead or print bar, or a continuous inkjet printhead or print bar. While a single agent distributor (322) is shown in Fig. 3, it is to be understood that multiple agent distributors (322) may be used.

In some examples, the agent distributor (322) may be scanned across the air-permeable platform (104) in the direction indicated by the arrow (320), e.g., along the Y-axis. As with the build material distributor (316), the agent distributor (322) may extend across a width of the air-permeable platform (104). The agent distributor (322) may also be scanned along the X-axis, for instance, where the agent distributor (322) does not span the width of the air-permeable platform (104) to enable the agent distributor (322) to deposit the binding agent over a large area of a build material layer. The agent distributor (322) may thus be attached to a moving XY stage or a translational carriage that moves the agent distributor (322) adjacent to the air-permeable platform (104) in order to deposit the binding agent in predetermined areas of a build material (317) layer that has been formed on the air-permeable platform (104).

In some examples, the agent distributor (322) may include a plurality of nozzles (not shown) through which the binding agent is to be selectively ejected. The agent distributor (322) may deliver drops of the binding agent at a desired resolution. In one example, the resolution ranges from about 300 dots per inch (DPI) to about 2400 DPI.

The additive manufacturing device (208) may further include an energy source (324) to activate the binding agent to join the particles in the build material (317) with binding agent deposited thereon. As described above, once activated, the binding agent solidifies portions of the build material with the binding agent disposed thereon such that it may form a cured intermediate part.

In some examples such as that depicted in Fig. 3, the energy source (324) may be stationary. However, in other examples, the energy source (324) may include mobile components that are mounted on a carriage to traverse across the build area to activate the binding agent.

As used herein, the term cured intermediate part refers to an intermediate part in which the binding agent has been activated so that it forms a glue that coats at least a portion of the metallic or ceramic particles and creates or strengthens the bond between the metallic or ceramic particles. In other words, the cured intermediate part is a part precursor with a shape representative of the final 3D printed object and that includes metallic or ceramic particles bound together by activated binding particles. Compared to the intermediate part, the mechanical strength of the cured intermediate part is greater, and in some instances, the cured intermediate part can be handled or extracted from the build material platform.

Following activation of the binding agent, the 3D object may be removed from the additive manufacturing device (208) and placed in another device such as a sintering oven to form a sintered part. As used herein, the term sintered part refers to the final 3D printed object which has been exposed to a heating process that sinters the metallic or ceramic particles. In the sintered part, the metallic or ceramic particles may merge together to form a continuous body.

In some examples, the energy source (324) may be a heater. When the binding agent is to be activated by heat, the energy source (324) may be used to supply suitable thermal energy. In some examples, the energy source (324) may be a conductive heater or a radiative heater (e.g., infrared lamps) that is part of additive manufacturing device (208). In these examples, the energy source (324) of the additive manufacturing device (208) may be used to heat an entire build material cake during printing or after the binding is finished. In another example, thermal energy to cure the intermediate part may be applied in a device separate from the additive manufacturing device (208), for instance, in a curing oven.

As described above, the additional heating processes, e.g., sintering or de-binding and sintering, may take place in a heater that is separate from the additive manufacturing device (208). Examples of the separate heater include a furnace or oven, a microwave, or devices capable of hybrid heating (i.e., heating and microwave heating). In this example, once the cured intermediate part is formed, the build material cake may be removed, the cured intermediate part may be separated from the build material cake, and then sintering, or de-binding and sintering may take place in the separate heater.

In other examples, the energy source (324) may be a source of electromagnetic radiation. In this example, the energy source (324) of electromagnetic radiation may emit infrared radiation having wavelengths ranging from about 800 nm to about 2 mm, which may be used for evaporation and/or thermal activation of the binding agent.

As another example, the electromagnetic radiation may be ultraviolet radiation having wavelengths ranging from about 100 nanometers (nm) to about 400 nm, which may be used for UV activation of the latent binder. In this example, the energy source (324) may be ultraviolet (UV) light sources, such as UV curing lamps, UV light emitting diodes (LED), xenon (Xe) flash lamps, or lasers with the desirable UV electromagnetic wavelengths.

As still another example, the electromagnetic radiation may be visible light having wavelengths ranging from about 400 nm to about 800 nm, which may be used for evaporation and/or thermal activation of the latent binder. In this example, the energy source (324) may be visible light sources, such as incandescent lamps, fluorescent lamps, Xe flash lamps, light emitting diodes (LED), or lasers with the desirable visible electromagnetic wavelengths.

As depicted in Fig. 3, the energy source (324) may be a stationary lamp. A stationary lamp may be in a fixed position relative to the air-permeable platform (104), and may be turned on when heat exposure is desired and off when heat exposure is not desired. In another example, the energy source (324) may be a moving lamp that may be mounted on a track to move across the air-permeable platform (104) in a direction as denoted by the arrow (320), e.g., along the Y-axis. This allows for printing and heating in a single pass. Such mobile lamps may make multiple passes over the air-permeable platform (104) depending on the amount of exposure utilized in the method(s) disclosed herein.

Fig. 3 also depicts the controller (212) which is operatively connected to the various components of the additive manufacturing device (208) and directs their operation. That is, the controller (212) may process print data that are based on a 3D object model of the 3D object/part to be generated. In response to data processing, the controller (212) may control the operations of the air-permeable platform (104), receptacle (314), build material dispenser (316), agent distributor (322), and the energy source (324). As an example, the controller (212) may control actuators (not shown) to control various operations of the additive manufacturing device (208) components.

As described above, trapped air can lead to voids in slurry coated and inkjet patterned metal powder structures. However, the vacuum system (106) and the air-permeable platform (104) allow for the air to be drawn out from the slurry. In a test, a porous alumina plate was placed on top of a vacuum source (106) on the slurry coater. A polymer sheet with one side perforated and the other solid was then positioned on top of the porous alumina plate. Multiple layers of slurry coating were spread on top of the polymer such that one side was coated with vacuum applied to the base and the other side without vacuum. In this test, surface bubbles were present on the side without vacuum and were absent when vacuum was applied to the underside of the multilayer coating. In this test, a vacuum level of between 10 and 200 microbars was maintained and efficiently removed trapped air from the slurry.

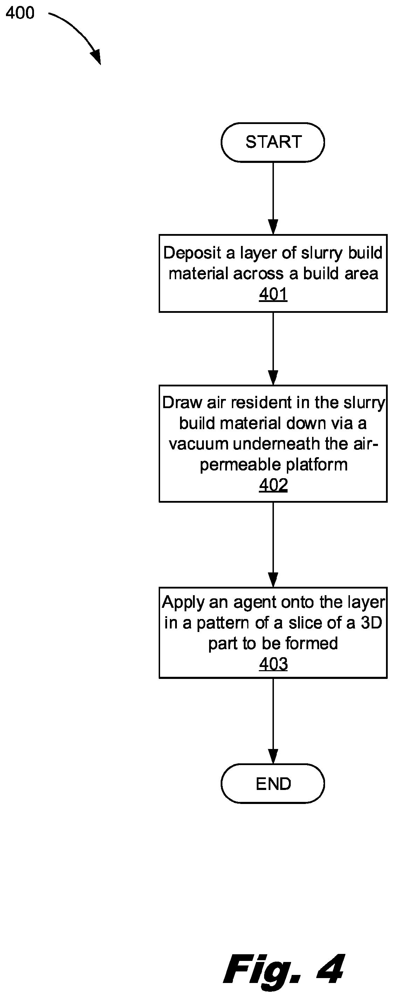

Fig. 4 is a flow chart of a method (400) for removing air resident in an additive manufacturing device (Fig. 2, 208) via an air-permeable platform (Fig. 1, 104), according to an example of the principles described herein. According to the method (400), a slurry build material (Fig. 3, 317) is deposited (block 401) on a surface. The surface may be an air-permeable platform (Fig. 1, 104) or a previously deposited layer of build material (Fig. 3, 317). For example, under the direction of a controller (Fig. 2, 212), a build material distributor (Fig. 3, 316) spreads the supplied powder build material (Fig. 3, 317) particles onto the air-permeable platform (Fig. 1, 104).

In one particular example, the build material (Fig. 3, 317) is deposited (block 401) using a slot die coater, a doctor blade coater, a rod coater, a knife coater, or combinations thereof. In other examples, the deposition (block 401) of the build material (Fig. 3, 317) slurry is accomplished using a slot die coater.

Next, air resident in the slurry build material (Fig. 3, 317) is drawn (block 402) down through a thickness of the layer of build material (Fig. 3, 317) via a vacuum system (Fig. 1, 106) that is disposed underneath the air-permeable platform (Fig. 1, 104) on which the layer is deposited. That is, as described above, once a layer is deposited, liquid from that layer seeps down into underlying layers, displacing the air in the underlying layers, which air may not be able to escape the build material (Fig. 3, 317). Air that does not escape may remain in the intermediate object, cured intermediate object, and sintered object. By applying a vacuum, the air is drawn (block 402) down through the layer, such that it is evacuated from the build material (Fig. 3, 317) and does not result as voids in the intermediate, cured, and sintered 3D object. As described above, activation of the vacuum system (Fig. 1, 106) may be started after one or a few layers of build material (Fig. 3, 317) have been deposited. Such a delay may prevent the pores and/or perforations from becoming clogged with build material (Fig. 3, 317) particles.

A binding agent is then applied (block 403) onto the layer in a pattern of a slice of a 3D object to be formed. That is, the binding agent is deposited on at least a portion of the build material (Fig. 3, 317) layer. The binding agent may be dispensed from the agent distributor (Fig. 3, 322). As mentioned above, the agent distributor (Fig. 3, 322) may be a thermal inkjet printhead, a piezoelectric printhead, etc. As such, the selectively applying of the binding agent may be accomplished by thermal inkjet printing, piezo electric inkjet printing, etc. In this example, the controller (Fig. 2, 212) may process data, and in response, control the agent distributor (Fig. 3, 322) to deposit the binding agent onto predetermined portion(s) of the build material layer that are to become part of the 3D object.

The agent distributor (Fig. 3, 322) may be programmed to receive commands from the controller (Fig. 2, 212) and to deposit the binding agent according to a pattern of a cross-section for the layer of the 3D object that is to be formed. As an example, if the 3D object that is to be formed is to be shaped like a cube or cylinder, the binding agent may be deposited in a square pattern or a circular pattern (from a top view), respectively, on at least a portion of the build material layer.

Portions of the powder build material are then hardened together to form the 3D object. That is, the binding agent may be activated or cured. This may be done by heating the binding agent to an activation temperature. In one example, the activation temperature equals or exceeds the MFFT of the binding agent. At temperatures at or above the MFFT, the agent particles coalesce and form a glue that coats the metallic or ceramic particles and creates the cured intermediate part or a cured layer thereof. In other words, at or above the MFFT, the binding agent particles coalesce to form a continuous network that binds the patterned volume of metallic or ceramic particles together.

In other examples, the binding agent may be activated by electromagnetic radiation exposure. When the binding agent is exposed to the electromagnetic radiation, the electromagnetic radiation may cross-link the binding agent to form the glue that coats the metallic or ceramic particles and creates the cured intermediate part or a layer thereof. In some examples, the binding agent is activated by ultraviolet (UV) radiation (e.g., wavelengths ranging from about 100 nm to about 400 nm).

As described above, in some examples, the binding agent may include an inorganic material such as a metal salt or metal nanoparticles. Curing of metal salt or metal nanoparticles involves evaporation of the carrier liquid from the binding agent. In an example, applied heat may be used to elevate the temperature of the patterned portion to facilitate evaporation. Cured metal salt and/or metal nanoparticle binders form connecting bridges (e.g., activated binding agent between build material particles), thereby creating a green part with sufficient strength to extracted from the air-permeable platform (Fig. 1, 104).

Following application of the binding agent, the build material (Fig. 3, 317) may be exposed to the energy source (Fig. 3, 324) after the binding agent is applied to the build material (Fig. 3, 317) layer and before another build material (Fig. 3, 317) layer is formed. In these examples, heating to form the cured intermediate part layer may take place at a temperature that is capable of activating (or curing) the binding agent, but that is not capable of thermally decomposing the binding agent, or of sintering the metallic or ceramic particles. In the examples in which each individual build material (Fig. 3, 317) layer is exposed to heating and/or electromagnetic radiation using the energy source (Fig. 3, 324), the processes may be repeated to iteratively build up several cured layers and to produce the cured intermediate part. The cured intermediate part can then be sintered. Such a sintering process may include extracting the cured intermediate part from a build material volume to remove any non-patterned metallic or ceramic particles and heating the cured intermediate part to form a sintered part.

In other examples, the method (400) includes forming the intermediate part in which the binding agent is not yet activated/cured. In these examples, the deposition of build material (Fig. 3, 317) and binding agent may be repeated to iteratively build up several patterned layers and to form the patterned intermediate part. Following deposition of the binding agent onto predetermined portion(s) of the build material (Fig. 3, 317) layer, the controller (Fig. 2, 212) may process data, and in response, control the air-permeable platform (Fig. 1, 104) to be moved a relatively small distance in the down direction denoted by the bi-directional arrow (Fig. 3, 318). In other words, the air-permeable platform (Fig. 1, 104) may be lowered to enable the next layer of build material (Fig. 3, 317) to be applied to form the next build material layer (Fig. 3, 317).

Whether activation/curing occurs layer-by-layer or after the entire intermediate part is patterned, the resulting cured intermediate part has enough mechanical strength to be able to withstand extraction from the bed (Fig. 1, 102) without being deleteriously affected (e.g., the shape is not lost). In other words, the cured intermediate part exhibits handleable mechanical durability. As such, the cured intermediate part may then be extracted from the build material cake.

After the extraction and/or the cleaning of the cured intermediate part, the cured intermediate part may be heated to form the sintered part. While not shown in Fig. 4, in an example of the method (400), the heating of the cured intermediate part to form the sintered part includes: heating the cured intermediate part to a sintering temperature to form the sintered part.

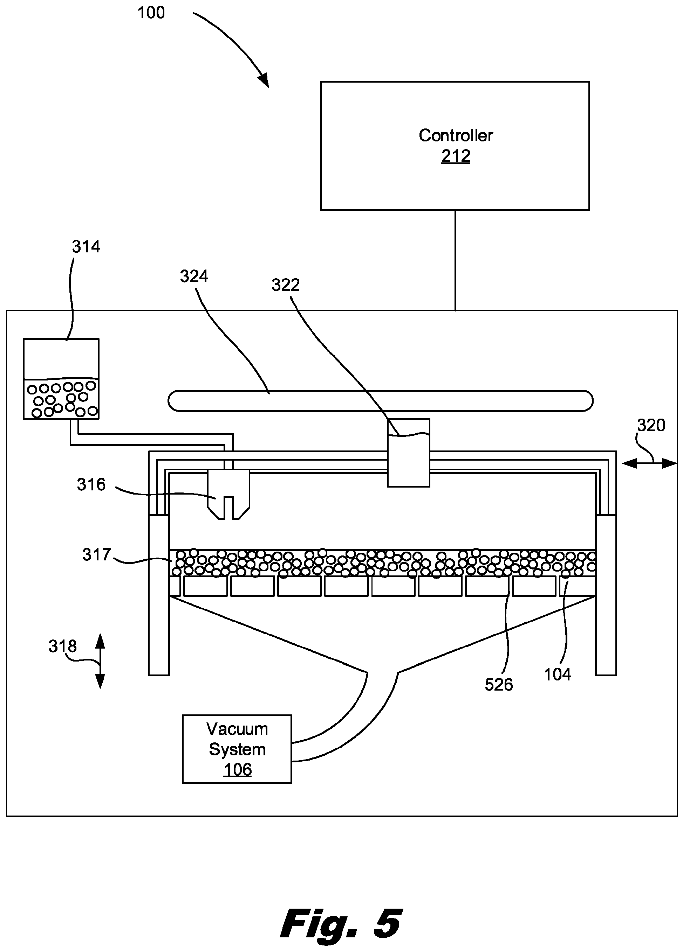

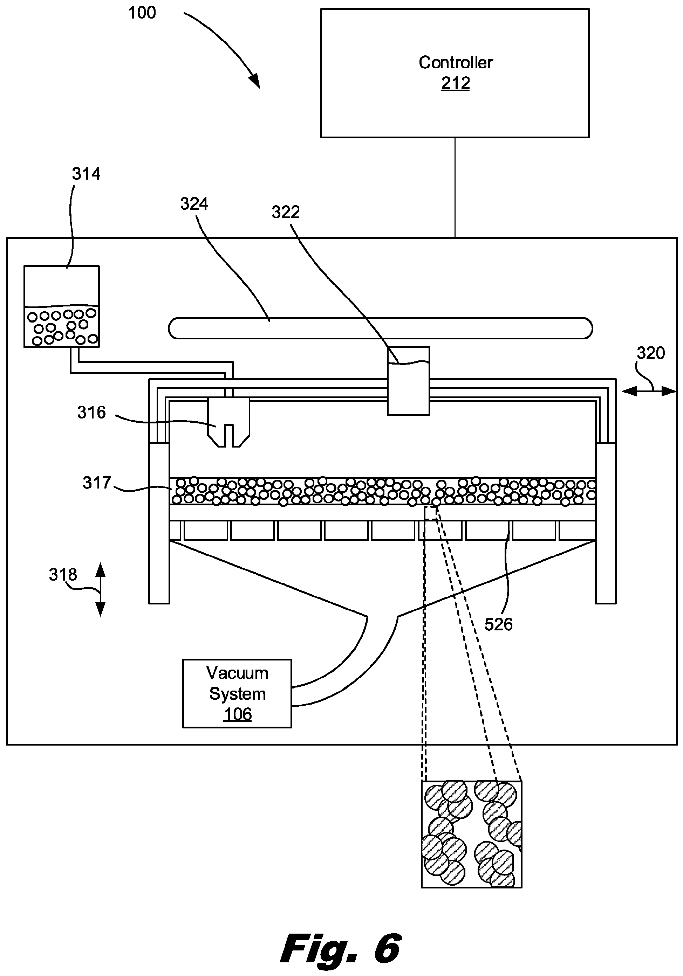

Fig. 5 is a side view of an additive manufacturing device (208) with an air-permeable platform (104) for additive manufacturing, according to an example of the principles described herein. In the example depicted in Fig. 5, the air-permeable platform (104) includes a perforated plate. That is, the platform (104) may include a number of perforations (526) through which air may be drawn from the layer of build material (Fig. 3, 317). In this example, the size of the perforations (526) may be between 0.5 and 3 millimeters in diameter, Dₚ, and may have a center-to-center spacing of between Dₚ+1 mm and Dp+10 mm. In an example, the build material (Fig. 3, 317) particles may be smaller than the perforation (526) diameters in the perforated plate. Accordingly, to prevent particle flow into the vacuum system (106), activation of the vacuum system (106) may be delayed until a predetermined number of layers of build material (Fig. 3, 317) have been deposited. In another example, such as that depicted in Fig. 6, to prevent particle flow into the vacuum system (106), a porous plate may be placed between the perforated plate and build material (Fig. 3, 317).

In some examples, the perforated plate, and in some cases other surfaces of the bed (Fig. 1, 102), may be heated to increase the evaporation rate of carrier fluid from both the slurry and the binding agent. That is, resistive heating elements may be placed between machined holes.

Fig. 6 is a side view of an additive manufacturing device (208) with an air-permeable platform (104) for additive manufacturing, according to an example of the principles described herein. As noted above, in Fig. 6, the perforated plate is separated from the build material (Fig. 3, 317) by a porous plate in order to prevent build material (Fig. 3, 317) particles from clogging the perforations (526).

As with the example depicted in Fig. 5, in some examples, the perforated plate, and in some examples other surfaces of the bed (Fig. 1, 102), may be heated to increase the evaporation rate of carrier fluid from both the slurry and the binding agent.

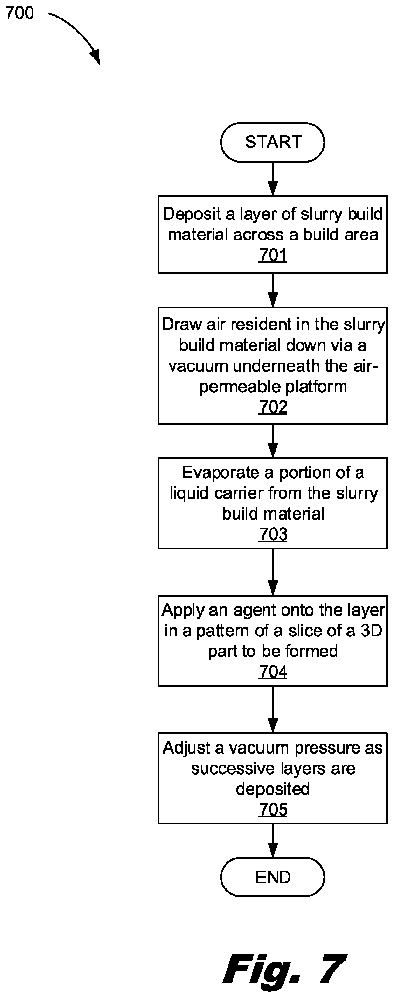

Fig. 7 is a flow chart of a method (7700) for removing air resident in an additive manufacturing device (Fig. 2, 208) via an air-permeable platform (Fig. 1, 104), according to an example of the principles described herein. As described above, the method (70070) includes depositing (block 7701) a layer of slurry build material (Fig. 3, 317) across a build area and drawing (block 7702) air resident in the slurry build material (Fig. 3, 317) down via a vacuum. These operations may be performed as described above in connection with Fig. 4.

In one example, the method (700) further includes evaporating (block 703) a portion of a liquid carrier from the slurry build material (Fig. 3, 317). That is, as described above, the slurry includes a liquid carrier. As the liquid carrier evaporates, the viscosity increasing agent in the slurry may form a glue that coats the metallic or ceramic particles and holds them in place in the build material (Fig. 3, 317). Enough liquid carrier may be evaporated from the slurry so that sufficient empty volume is created between metallic or ceramic particles in the build material (Fig. 3, 317) layer to accommodate the application of the binding agent.

A binding agent is then applied (block 704) to the layer of build material (Fig. 3, 317). This may be performed as described above in connection with Fig. 4.

In some examples, the controller (Fig. 2, 212) adjusts a vacuum pressure as successive layers of slurry build material (Fig. 3, 317) are deposited. That is, as additional layers are added, additional distance is created between where the air bubbles are to be extracted from and the vacuum system (Fig. 1, 106). This increase in distance and the tortuous path from the topmost layer down to the vacuum system (Fig. 1, 106) may reduce the flow rate of air for a given vacuum pressure. Accordingly, as additional layers are deposited, the vacuum system (Fig.1, 106) draw power may be increased (i.e., vacuum pressure reduced) to ensure enough vacuum is provided to draw down the air resident in the build material.

Such systems and methods 1) reduce the presence of voids caused by trapped air in slurry coatings and/or agent-based additive manufacturing operations; 2) is a low-cost solution; 3) broaden the range of slurry chemistries that may be used; 4) increase throughput by increasing carrier evaporation rate; and 5) allow for higher coverage of a binding agent.

## Claims

1. An additive manufacturing system comprising a manufacturing stage (100, 208) and a build material (317), the manufacturing stage (100, 208) comprising:
a bed (102) to define a volume where a three-dimensional object is to be formed;
an air-permeable platform (104) on which the build material is deposited; and
a vacuum system (106) to draw air resident in the build material down through the air-permeable platform (104);
whereby the build material is a slurry comprising:
build material particles;
a liquid carrier, and
a viscosity increasing agent.

2. The additive manufacturing system of claim 1, wherein the air-permeable platform (104) comprises at least one of:
a porous material; and
a perforated plate.

3. The additive manufacturing system of claim 2, wherein the porous material comprises pores ranging from 5 to 150 microns in diameter.

4. The additive manufacturing system of claim 2, wherein the porous material is a porous metal material.

5. The additive manufacturing system of claim 2, wherein the porous material is a porous ceramic material.

6. The additive manufacturing system of claim 1 wherein at least one of the air-permeable platform (104) and the sidewalls of the bed (102) are heated.

7. The additive manufacturing system of claim 1, wherein the viscosity increasing agent is a hydrocolloid.

8. An additive manufacturing device comprising an additive manufacturing system according to any of the above claims, the device further comprising:
a build material distributor (210, 316) to successively deposit layers of the build material into a build area; and
a controller (212) to control a vacuum pressure of the vacuum system (106).

9. The additive manufacturing device of claim 8, further comprising an agent distributor (322)to selectively distribute a binding agent onto the layers of the build material in a pattern of a slice of a three dimensional object to be formed.

10. The additive manufacturing device of claim 9, further comprising an energy source (324) to activate the selectively distributed binding agent to join the particles in the build material with binding agent deposited thereon.

11. A method (400, 700) for removing air resident in an additive manufacturing device according to any of the claims 8 to 10, comprising:
depositing (401, 701) a layer of slurry build material across a build area;
drawing (402, 702) air resident in the slurry build material down through a thickness of the layer via a vacuum from underneath an air-permeable platform (104) on which the layer is deposited; and
applying (403, 704) a binding agent onto the layer in a pattern of a slice of a three-dimensional object to be formed.

12. The method of claim 11, further comprising adjusting (705) a vacuum pressure as successive layers of slurry build material are deposited.

13. The method of claim 11, further comprising evaporating (703) a portion of a liquid carrier of the slurry build material.

14. The method of claim 11, further comprising evaporating a portion of a liquid carrier of the binding agent.

## Patentansprüche

1. System für eine additive Fertigung, das eine Fertigungsstufe (100, 208) und ein Baumaterial (317) umfasst, wobei die Fertigungsstufe (100, 208) umfasst:
ein Bett (102), um ein Volumen zu definieren, in dem ein dreidimensionales Objekt ausgebildet werden soll;
eine luftdurchlässige Plattform (104), auf der das Baumaterial abgeschieden wird; und
ein Vakuumsystem (106), um Luft, die in dem Baumaterial enthalten ist, durch die luftdurchlässige Plattform (104) nach unten abzusaugen;
wobei das Baumaterial ein Schlamm ist, der umfasst:
Baumaterialpartikel;
einen flüssigen Träger; und
ein Mittel zum Erhöhen von Viskosität.

2. System für eine additive Fertigung nach Anspruch 1, wobei die luftdurchlässige Plattform (104) mindestens eines umfasst von:
einem porösen Material; und
einer Lochplatte.

3. System für eine additive Fertigung nach Anspruch 2, wobei das poröse Material Poren mit einem Durchmesser von 5 bis 150 Mikrometern umfasst.

4. System für eine additive Fertigung nach Anspruch 2, wobei das poröse Material ein poröses Metallmaterial ist.

5. System für eine additive Fertigung nach Anspruch 2, wobei das poröse Material ein poröses Keramikmaterial ist.

6. System für eine additive Fertigung nach Anspruch 1, wobei mindestens eines von der luftdurchlässigen Plattform (104) und den Seitenwänden des Betts (102) beheizt ist.

7. System für eine additive Fertigung nach Anspruch 1, wobei das Mittel zum Erhöhen von Viskosität ein Hydrokolloid ist.

8. Vorrichtung für eine additive Fertigung, die ein System für eine additive Fertigung nach einem der obigen Ansprüche umfasst, wobei die Vorrichtung ferner umfasst:
einen Baumaterialverteiler (210, 316), um Schichten des Baumaterials in einen Baubereich aufeinanderfolgend abzuscheiden; und
eine Steuerung (212), um einen Vakuumdruck des Vakuumsystems (106) zu steuern.

9. Vorrichtung für eine additive Fertigung nach Anspruch 8, die ferner einen Mittelverteiler (322) umfasst, um ein Bindemittel auf die Schichten des Baumaterials in einem Muster einer Scheibe eines auszubildenden dreidimensionalen Objekts selektiv zu verteilen.

10. Vorrichtung für eine additive Fertigung nach Anspruch 9, die ferner eine Energiequelle (324) umfasst, um das selektiv verteilte Bindemittel zu aktivieren, um die Partikel in dem Baumaterial mit dem darauf abgeschiedenen Bindemittel zu verbinden.

11. Verfahren (400, 700) zum Entfernen von Luft, die in einer Vorrichtung für eine additive Fertigung enthalten ist, nach einem der Ansprüche 8 bis 10, das umfasst:
Abscheiden (401, 701) einer Schicht aus Schlammbaumaterial über einem Baubereich;
Absaugen (402, 702) von Luft, die in dem Schlammbaumaterial enthalten ist, nach unten durch eine Dicke der Schicht mittels eines Vakuums von unterhalb einer luftdurchlässigen Plattform (104), auf der die Schicht abgeschieden ist; und
Aufbringen (403, 704) eines Bindemittels auf die Schicht in einem Muster einer Scheibe eines auszubildenden dreidimensionalen Objekts.

12. Verfahren nach Anspruch 11, das ferner ein Einstellen (705) eines Vakuumdrucks umfasst, wenn aufeinanderfolgende Schichten aus Schlammbaumaterial abgeschieden werden.

13. Verfahren nach Anspruch 11, das ferner ein Verdampfen (703) eines Teils eines flüssigen Trägers des Schlammbaumaterials umfasst.

14. Verfahren nach Anspruch 11, das ferner ein Verdampfen eines Teils eines flüssigen Trägers des Bindemittels umfasst.

## Revendications

1. Système de fabrication additive comprenant un plateau de fabrication (100, 208) et un matériau de construction (317), le plateau de fabrication (100, 208) comprenant :
un lit (102) destiné à définir un volume où un objet tridimensionnel doit être formé ;
une plate-forme perméable à l'air (104) sur laquelle le matériau de construction est déposé ; et
un système de vide (106) destiné à aspirer de l'air résidant dans le matériau de construction vers le bas à travers la plate-forme perméable à l'air (104) ;
selon lequel le matériau de construction est une suspension comprenant :
des particules de matériau de construction ;
un support liquide ; et
un agent augmentant la viscosité.

2. Système de fabrication additive selon la revendication 1, dans lequel la plate-forme perméable à l'air (104) comprend au moins l'un de :
un matériau poreux ; et
une plaque perforée.

3. Système de fabrication additive selon la revendication 2, dans lequel le matériau poreux comprend des pores d'un diamètre allant de 5 à 150 microns.

4. Système de fabrication additive selon la revendication 2, dans lequel le matériau poreux est un matériau métallique poreux.

5. Système de fabrication additive selon la revendication 2, dans lequel le matériau poreux est un matériau céramique poreux.

6. Système de fabrication additive selon la revendication 1, dans lequel au moins l'une de la plate-forme perméable à l'air (104) et des parois latérales du lit (102) est chauffée.

7. Système de fabrication additive selon la revendication 1, dans lequel l'agent augmentant la viscosité est un hydrocolloïde.

8. Dispositif de fabrication additive comprenant un système de fabrication additive selon l'une quelconque des revendications précédentes, le dispositif comprenant en outre :
un distributeur de matériau de construction (210, 316) destiné à déposer successivement des couches du matériau de construction dans une zone de construction ; et
un dispositif de commande (212) destiné à commander une pression de vide du système de vide (106).

9. Dispositif de fabrication additive selon la revendication 8, comprenant en outre un distributeur d'agent (322) destiné à distribuer sélectivement un agent liant sur les couches du matériau de construction selon un motif d'une tranche d'un objet tridimensionnel à former.

10. Dispositif de fabrication additive selon la revendication 9, comprenant en outre une source d'énergie (324) destinée à activer sélectivement l'agent liant distribué afin de joindre les particules dans le matériau de construction avec un agent liant déposé sur celui-ci.

11. Procédé (400, 700) destiné à éliminer de l'air résidant dans un dispositif de fabrication additive selon l'une quelconque des revendications 8 à 10, comprenant :
le dépôt (401, 701) d'une couche d'un matériau de construction en suspension sur une zone de construction ;
l'aspiration (402, 702) d'air résidant dans le matériau de construction en suspension vers le bas à travers une épaisseur de la couche par le biais d'un vide sous une plate-forme perméable à l'air (104) sur laquelle la couche est déposée ; et
l'application (403, 704) d'un agent liant sur la couche selon un motif d'une tranche d'un objet tridimensionnel à former.

12. Procédé selon la revendication 11, comprenant en outre le réglage (705) d'une pression de vide au fur et à mesure que des couches successives d'un matériau de construction en suspension sont déposées.

13. Procédé selon la revendication 11, comprenant en outre l'évaporation (703) d'une partie d'un support liquide du matériau de construction en suspension.

14. Procédé selon la revendication 11, comprenant en outre l'évaporation d'une partie d'un support liquide de l'agent liant.
